# EUROPEAN PATENT SPECIFICATION

(11) **EP 0 744 304 B1**
(45) Date of publication and mention of the grant of the patent: **14.08.2002**
(21) Application number: 96107887.0
(22) Date of filing: 17.05.1996
(51) Int. Cl.: B60C 13/00, B60C 13/04, B60C 1/00

(54) **Tires with dyed indicia**
Luftreifen mit gefärbter Markierung
Pneumatique ayant une marque colorée

(30) Priority: 23.05.1995 US 448635
(43) Date of publication of application: 27.11.1996
(73) Proprietor: THE GOODYEAR TIRE & RUBBER COMPANY, Akron, Ohio 44316-0001 (US)
(72) Inventor: Majumdar, Ramendra Nath, Hudson, Ohio 44236 (US); White, John Richard, Wadsworth, Ohio 44281 (US)
(74) Representative: Leitz, Paul

(56) References cited:
- US-A- 3 577 261
- US-A- 3 623 900
- US-A- 3 729 041
- US-A- 3 830 274
- US-A- 4 131 149
- PATENT ABSTRACTS OF JAPAN vol. 015, no. 068 (C-0807), 18 February 1991 & JP 02 293476 A (FUJI RUBBER CO LTD), 4 December 1990,
- PATENT ABSTRACTS OF JAPAN vol. 006, no. 007 (C-087), 16 January 1982 & JP 56 131634 A (DAINIPPON TORYO CO LTD;OTHERS: 01), 15 October 1981,

## Description

### Field of Invention

The present invention relates to dyeing non-black solvent swellable elastomeric articles or products. More specifically, the present invention relates to a dye solution which is generally a hydrocarbon soluble dye dissolved in a hydrocarbon solvent, the dye solution being utilized to penetrate and dye a non-black swellable-hydrocarbon rubber. The non-black rubber may in general be integral or adhered to an elastomeric or thermoset substrate. An apparatus for applying the dye solution is provided as a dispenser comprised of a reservoir and an applicator such as a felt tip. The present invention is particularly directed to dyeing white sidewall portions or white lettering or indicia of pneumatic tires.

### Background

Heretofore, colored vulcanized elastomers have often been prepared by mixing finely divided pigments with uncured rubber followed by vulcanizing the rubber composition. Such elastomers generally have a very uniform color which is resistant to abrasion in the sense that a pigment is dispersed throughout the rubber composition.

U.S. Patent 3,577,261 provides a quick method for identifying uncured rubber stocks and rubber cements by the effect of a dye therein on an adherent layer applied thereto. The adherent layer includes particulate pigments and a solvent. The solvent picks up dye from the substrate of rubber stock or rubber cement and imparts the color of the dye to the adherent layer. It is implied that the color of the dye within the rubber stock or rubber cement is hard to visually perceive because of colored pigments (such as carbon black) in the substrate.

White sidewalls and raised white letters on pneumatic tires are often composed of stain resistant elastomers, particularly elastomers having large amounts of isobutylene repeat units such as butyl rubber and halobutyl rubber, as well as EPDMs so that common contaminants on the roadways such as motor oils, salt, cinders, tars and also staining oils and vulcanization accelerators within the adjoining black elastomer portions of the tire do not readily stain or discolor the white regions.

### Summary of the Invention

In accordance with this invention, a pneumatic tire , a process for dyeing a pneumatic tire and a rubber article are provided as recited in the claims.

### Detailed Description of the Invention

The invention generally relates to any vulcanized rubber article, generally black because it contains carbon black therein, which has a non-black, solvent swellable, hydrocarbon rubber portion thereon or integral therewith. The present invention will be described with respect to a preferred embodiment of white tire sidewalls, the white sidewall region being a component in a toroidal-shaped pneumatic tire. It is to be understood that it can also be applied to numerous articles or products such as bumper strips, vehicle protection or trim strips, tennis shoes and the like. The white regions on a tire sidewall are generally prepared by assembling a white colored compounded rubber with the tire forming components during the assembly of a green (uncured) tire. The white colored rubber is desirably crosslinked in the mold with the other portions of the tire. The white colored component is formulated so that it is compatible with the other components and bonds well with the crosslinked elastomers of the tire.

While a preferred embodiment of the disclosure of the invention relates to dyeing a white tire sidewall, it is to be understood that generally any non-black rubber can be dyed. By the term "non-black" it is meant any color or reflectivity which is greater than zero, on the CIE 1976 L* scale such as rubbers which have a CIE 1976 L* value, of at least 40, desirably at least 50, preferably at least 60, and more preferably at least 70, 80, or 85 before dyeing. A pure white color on the CIE 1976 L* scale has a value of 100, while a black color has a value of 0. Reference to the CIE 1976 L* scale can be readily found in ASTM E 308-94a.

A preferred method of forming the white regions of the sidewall is to extrude the white colored component to another (generally black) tire component. The extruded white colored compound has a thin skin of a compounded rubber that matches the composition and color of the tire and which covers the white rubber component. When this covered white component is cocured with the tire and thus adhered or chemically joined thereto, the entire tire sidewall appears to be one color irrespective of whether raised or depressed regions are present on the tire such as letters, or rings, logos, etc. The tire manufacturer can then expose the white component by grinding or abrading away the thin skin to remove the same and expose any desired regions of white rubber. Typically letters spelling a trade name, tire sizes, shape designation, etc. are raised letters (protrude above the rest of the sidewall) while rings around the tire can be raised or recessed.

Pneumatic tires generally comprise a tread region which is designed to contact the road or path, two or more sidewalls which help contain the air and provide lateral support, and bead areas which make contact with a rim.

The dyeable, non-black, solvent swellable, hydrocarbon elastomers or rubber compositions of the present invention are either substantially free or completely free of polar groups other than small amounts of halogens as in butyl rubber. Desirably, the one or more elastomers have an average of less than 10 weight percent, more desirably less than 5 weight percent, preferably less than 3 or 2 weight percent, and more preferably completely free (i.e, 0 percent) of polar groups. Such polar groups are carboxylic acids, sulfites, sulfates, alkali salts of carboxylic acids, esters, etc., and specifically include amine, sulfonyl, carbonyl, hydroxyl, nitrile, carboxyl, alcohol, ether linkages, and other groups. In calculating these weight percents, only the polar group is considered while attached alkyl or aromatic groups are excluded. Desirably excluded (i.e., substantially free or completely free of) from this embodiment or used in such small amounts to result in an elastomer blend having less than the above specified amounts of polar groups are butadiene-acrylonitrile polymers, acrylate polymers and other polar elastomers.

Suitable dyeable elastomers include copolymers having at least 50, desirably at least 80 and preferably at least 90 weight percent repeat units from C₄ to C₇ isomonoolefins, lightly halogenated versions thereof (e.g., less than 5 percent by weight halogen), polydiene (i.e., C₄ to C₁₂) homopolymers or copolymers; copolymers of diene (C₄ to C₁₂) and vinyl aromatic monomers (C₈ to C₁₅); natural rubber, ethylene propylene rubbers, hydrogenated polymers or copolymers of (C₄ to C₁₂) dienes like. The lightly halogenated versions of the above polymers are used due to beneficial changes in cure behavior and are not considered as polar polymers.

Preferable elastomer compositions for white sidewall portions comprise from 20 to 80 parts by weight of a copolymer having at least 50 weight percent repeat units from C₄ to C₇ isomonoolefin monomers (e.g., butyl rubber), more desirably from about 25 to about 65 parts by weight; optionally up to 30 parts by weight of an ethylene-propylene diene monomers rubber (EPDM), more desirably up to 25 parts by weight; and up to 80 parts by weight of a homopolymer or copolymer of one or more conjugated diene monomers and optionally with vinyl substituted aromatic monomers, more desirably from 15 to 75 parts by weight wherein all parts by weight are per 100 parts by weight (PHR) of total rubbers in the composition.

The carbon black filled portion of a tire sidewall often contains antioxidants and other oil soluble components which tend to discolor or stain many white rubber compounds. Often the antioxidants and other oil soluble components give desirable properties to the tire which cannot be achieved with non-staining components. Therefore, tire sidewall portions which are to be white or light colored, are compounded with large amounts (e.g., greater than 30 PHR, more desirably greater than 40 PHR, and preferably greater than 50 PHR of rubbers having predominantly repeat units from one or more isomonoolefin (C₄-C₇) monomers (e.g., butyl rubber). The non-permeable nature of polymers from isomonoolefin monomers such as isobucylene (e.g., butyl or halobutyl rubber) is the reason why these rubbers are used nearly exclusively (instead of natural rubber or styrenebutadiene rubber) for innertubes and tire innerliners. These isobutylene based rubbers as a cured layer slow the diffusion of pressurized air from inside the tire to a negligible rate. Similarly, polymers from isomonoolefins such as isobutylene slow the diffusion of staining ingredients such as oils, thus preventing undesirable staining of white sidewalls. The effect of polymers from isomonoolefins of preventing dye migration into the rubber is minimized in this application by applying the dye with a solvent that swells the rubber and facilitates migration of dye into the rubber. Desirably, the copolymer of at least 50 weight percent isomonoolefin is a copolymer of at least 50 weight percent isobutylene or halogenated isobutylene.

Desirably, the copolymer having at least 50 weight percent of a isomonoolefin comprises butyl rubber (typically a polymer with from 95 to 99 weight percent isobutylene repeat units and from 1 to 5 weight percent of diolefin repeat units) or chlorinated or brominated butyl rubber (having from 0.25 to 2.5 weight percent halogen, more desirably from 0.5 to 1.75 weight percent halogen). Other desired copolymers having at least 50 weight percent of isomonoolefins are derived from polymerizations of C₄ to C₇ isomonoolefins with p-alkylstyrenes having from 80 to 99 weight percent, more desirably from 85 to 98 weight percent isomonoolefin repeat units and from 1 to 20 weight percent, and more desirably from 2 to 15 weight percent of p-alkylstyrenes. These polymers of isomonoolefins and p-alkylstyrenes are made by Exxon. A preferred copolymer is a brominated copolymer with up to 5 weight percent bromine, more desirably from 0.2 to 1.5 or 2.5 weight percent bromine, and from 85 to 98 weight percent isobutylene repeat units and from 2 to 15 weight percent p-methylstyrene. The predominate site of bromination is the p-methyl group.

Desirably the ethylene propylene diene monomer (EPDM) copolymer comprises repeat units of from 20 to 90 weight percent, and more desirably from 30 to 85 weight percent ethylene, from 10 to 80 weight percent, more desirably from 15 to 70 weight percent of at least one alpha olefin having from 3 to 16 carbon atoms (usually mostly propylene) based on the total of ethylene and alpha olefins having from 3 to 16 carbon atoms, and from 0.1 to 0.8 moles of one or more nonconjugated dienes having from 6 to 12 carbon atoms per kilogram of EPDM polymer.

Desirably the homopolymer or copolymer of a conjugated diene monomer is natural rubber or a synthetic polymer comprised of at least 50 and usually at least 70 weight percent repeat units derived from one or more conjugated diene monomers having from 4 to 8 or 12 carbon atoms. Natural rubber (comprising repeat units of isoprene) is preferred. A desirable comonomer for the residual of the copolymer is vinyl aromatic monomers of from 8 to 12 carbon atoms such as styrene. Preferred polymers include polybutadiene and polyisobutylene. Polar monomers such as acrylates, acrylics, itaconic acid, etc., if utilized at all, are only used in amounts so the total amount of polar groups do not exceed the specified percentages. Other non-polar monomers can also be used in the polymers or copolymers of this elastomer.

The solvent swellable rubber compositions of the present invention are not dyed until they are cured (vulcanized or crosslinked). The crosslink density is generally measured by volume swelling capacity with a good solvent. Lower crosslink density is associated with fewer crosslinking occurrences per polymer chain, and low crosslink density results in greater swelling capacity of the cured rubber in a good solvent. Suitable swelling by percent volume in cyclohexane solvent is at least 50 percent, desirably at least 75 percent, 100 percent, or 125 percent, and preferably at least 150 percent or 175 percent by volume of the solvent swellable rubber after soaking overnight at room temperature, i.e., 24 hours at 25°C. Only after the solvent swellable hydrocarbon rubbers such as an elastomeric tire sidewall has been shaped and crosslinked into a final article or end product is the dye applied thereto. This is in distinct contrast to the occasional use of pigments in rubber compounds wherein the pigment was always dispersed in the rubber before crosslinking or-vulcanization occurs.

Known crosslinking agents (also known as curatives) which can be used include sulfur, sulfur accelerators, peroxides, other non sulfur curatives, sulfur donor compounds, etc. Sulfur accelerators include guanidines, thiurams, dithiocarbamates, thioureas, thiazoles, sulfenamides and xanthates. Peroxides include dialkyl peroxides, peresters, hydroperoxides, peroxydicarbonates, etc. Crosslinking agents also include zinc oxide, etc. The use of these crosslinking agents, their effective amounts, etc., are well known to the art. Vulcanization is a subset of the crosslinking process. Crosslinking agents are also known as curatives. Crosslinking is often called curing in the art of rubber processing.

Fillers can be added to the non-black, solvent swellable rubber composition. Fillers generally are particulate material added to either reduce the total cost or to enhance the stiffness and/or chemical resistance of a composition. Reinforcing fillers tend to enhance the strength of a composition. While carbon black can be utilized, it is not desirable in non-black articles and hence is used in low amounts such as less than 2 PHR, more desirably less than 1.5 or 1 PHR, and preferably less than 0.5 or 0.25 PHR such that the composition would not be black and would be capable of reflecting some colored light as a result of dyeing. Preferably, the dyed elastomers of the present invention are substantially free if not completely free, that is zero parts of carbon black per 100 parts of rubber. Rubber compositions with more than these amounts are generally referred to as black surfaces while those with less than these amounts are generally referred to as non-black.

Suitable and desired fillers include talc, clay, silica, calcium carbonate, etc. These may function in addition as pigments -or pigment extenders but their principal function is as fillers. Pigments are desirably added to the composition. Desirably only white pigments are added since white can be dyed to any other color. Thus, any white or non-black pigments which reflect light can be used in these rubber formulations. Desirably, the pigments used have good color retention during aging and resistance to discoloring or degrading on U.V. exposure or they are formulated with age resistors or U. V. protectors to provide color integrity in the final product. The pigments desirably are insoluble in the elastomer component and are consequently dispersed in particulate form. Desirable pigments include titanium dioxide, zinc oxide, white lead and antimony oxide, as well as precipitated silica, calcium silicate, calcium carbonate, treated clays, talc, and whiting.

Other additives added to the solvent swellable hydrocarbon composition can include processing aids which generally enhance a composition's speed and ease of processing. They may function by reducing an elastomer's molecular weight or by lubricating the elastomer's surface. Age resistors and U.V. protectors may be added to the composition. Waxes are desirably used because they tend to bloom to the surface and protect the elastomer immediately below the waxy surface. The additives may absorb or neutralize harmful materials or energy or they function to block a mechanism of aging or degradation.

While processing oils are often used in rather large amounts in tires and other molded or shaped elastomer articles, if utilized in the non-black, solvent swellable rubber, they are desirably utilized in small amounts. To enhance the compatibility of the elastomer with the dye, the oil generally has the same solubility parameter as the elastomer and/or the solvent for the dye and thus are compatible therewith. Small amounts of oils are from 1 or to 15 PHR and desirably from 2 to 10 PHR. The process oils can include non-staining oils such as naphthenic and paraffinic oils.

The hydrocarbon solvents which can be utilized to swell the non-black hydrocarbon rubber compositions generally have a solubility parameter of from 12 to 20, desirably from 13 to 18, and preferably from 14 to 17.5 [J/m³]^{1/2} · 10⁻³ · Such solvents can be identified in the Polymer Handbook, Second Edition, edited by J. Brandrup and E. H. Immergut, John Wiley and Sons, New York, NY (1975), pages IV-337-347. If a blend of two or more different solvents is utilized, the solubility parameter of the overall blend generally lies within the above-noted ranges. Generally, but not always, solvents which have such suitable solubility parameters can be classified as terpene based solvents such as KNI Solvent-2000; various naphtha solvents such as high flash naphthas, petroleum naphtha, mineral spirits ; various fuel oils such as kerosene, fuel oil no. 2, fuel oil no. 4 ; various alkanes including halogenated alkanes such as cyclohexane, hexane, heptane, octene, decane, dodecane, methylene chloride, chloroform ; and various aromatic solvents including halogenated aromatics such as toluene, various Tolusols generally containing C₇ hydrocarbons and significant amounts of aromatic compounds therein, xylene, dichlorobenzene. Another, but not highly desired class of solvents include the various ethers, desirably those having a high molecular weight such as diphenyl ether. A highly preferred solvent is RE-ENTRY® KNI Solvent-2000, a terpene based solvent from Envirosolv Inc., also d.b.a. Environmental Solvents Corporation of Jacksonville, Florida.

The hydrocarbon solvents with the exception of halogenated solvents are generally substantially free or completely free of polar atoms and/or groups. That is, the weight of the total number of any polar atoms and/or groups therein is generally less than 10 percent by weight, desirably less than 5 percent by weight, more desirably less than 3 or 2 percent by weight, and preferably nil, that is, zero percent by weight based upon the total weight of the solvent. Polar atoms include oxygen, nitrogen, sulfur, and the like. Polar groups are defined with respect to the hydrocarbon elastomers. Although halogenated solvents are suitable even though they are polar, they are generally not desired due to environmental reasons.

The desired non-polar solvents are generally poorly hydrogen bonded except for the ethers which are moderately hydrogen bonded. Otherwise, moderately hydrogen bonded and strongly hydrogen bonded solvents are avoided and thus are not within the scope of the present invention inasmuch as they generally do not effectively swell non-black rubber compositions. Moderately hydrogen bonded solvents which are avoided, generally include various esters, ketones, glycol monoethers, and the like. Strongly hydrogen bonded solvents include various alcohols, amines, acids, amides, aldehydes, and the like. Numerous examples of solvents having the above noted solubility parameters as well as being characterized as poorly, moderately, or highly hydrogen bonded are set forth in the Polymer Handbook.

Another desired attribute of the hydrocarbon solvents of the present invention is that they have a flash point of at least 100°F, (38°C) more desirably at least 125°F (52°C), and preferably at least 140°F (60°C); have no health- effects at the typical exposure levels; and not be hazardous to the environment (desirably biodegradable). Desirably, the solvent has low ratings such as a total rating of 5 or less, and desirably 3 or less based upon the National Fire Protection Association's classification on labelling and properties of flammable liquids (health, flammability, and reactivity ratings).

Dyes are generally defined as compounds which contain groups that confer color, generally called chromophores. More information on dyes in general is available in "The Chemistry of Synthetic Dyes," volumes I and II by K. Venkaktaraman, 1952, published by Academic Press, Inc., New York, and in "Organic Chemistry," by W. T. Caldwell, 1943, published by Houghton Mifflin Company in its chapter entitled "Synthetic Dyes," pages 702-725. The dyes desirably are soluble in the low polarity or non-polar hydrocarbon solvents and/or soluble in the poorly hydrogen bonded solvents and are generally free of pigments. Desirably these dyes are soluble to the extent of from 0.0001 to 1.0, desirably from 0.001g to 0.9, and preferably from 0.01 to 0.08 grams per 1.0 gram of solvent when the solvent has a solubility parameter of from 12 to 20, etc., with the solvent being further characterized as being generally a non-polar and/or a poorly hydrogen bonded solvent. Suitable dyes desirably include azo, diazo, quinoline, anthraquinone, indo, ketone imine/methine dyes or derivatives thereof, as well as combinations thereof. Preferred dyes include the azo and quinoline dyes. The synthetic dyes can also be derivatives of aromatic hydrocarbons such as benzene, toluene, naphthalene, and anthracene. Preferred dyes are Akrodye™ oil violet IRS E-705 solvent violet 13 (9,10-anthracenedione)-; 1-hydroxy-4-[(4-methylphenyl)amino], Akrodye™ oil orange #3 E-7174 solvent yellow 14, and Akrodye™ oil brown E-8855 solvent red 2 available from Akrochem Corp. in Akron, Ohio. Other dyes that can be used include Morplas yellow 33, a quinoline type (2(2-quinolylmethylene) phthalide); Morplas red 46, an anthraquinone dye (9,10-anthracenedione, 1-(alkylamino)-; Automates yellow 126, an azo dye, also known as solvent yellow (1-phenyl-3-methyl-4-(alkylphenylazo)-5-pyrazolone; Automates red B, a diazo dye also known as solvent red 164 (2-naphthalenol[(2-naphthalenol[ (phenylazo)phenyllazo alkyl derivatives); Akrodye™ oil yellow #6, solvent yellow 56, a mono azo dye; Akrodye™ oil red #1, solvent red 26, a diazo dye; Akrodye™ oil green #1, solvent green, an azo anthraquinone dye; Ceres™ red; Akrodye™ E8855 brown powder; Pylakrome™ Red LX-1903 (diazo, solvent red 24, 26) (aka CAS# 85-83-6 and CAS# 447-7-79-6); Pylakrome™ Yellow LX-1913A (monoazo, solvent yellow 29 and 56) (aka CAS# 6706-82-7 and CAS# 2481-94-9); Pylam™ blue LX-7270 (anthraquinone, solvent blue 36 and 58) (aka CAS# 14233-37-5 and CAS# 2987-08-9); and Akrodye™ oil blue #8, solvent blue 59, an anthraquinone dye.

The present invention relates to dyeing generally any type of the above-noted non-black, solvent. swellable, rubber compositions, including those contained on a crosslinked substrate such as vehicle bumpers or trim, shoes, e.g., tennis shoes, and the like. The crosslinked substrate can also be a tire, for example, e.g., pneumatic tires as used on vehicles (cars, trucks, etc.) construction equipment tires, agricultural equipment tires, cart tires, wheelbarrow tires, recreation equipment tires (all terrain vehicles, motorcycles) and bicycles tires.

Other uses of the dyed portion of non-black rubber compositions include the identification or origin of goods, the identification of trademarks or tradenames, the selective application of the dye for identifying marks (such as lot number, batch type, customer, supplier, and part number). Goods can also be customized or further colored by use of dyeing thereby enhancing their desirability and marketability.

### EXAMPLES

The following examples illustrate how the organic - soluble dye can be transferred into swellable elastomeric compositions and especially white sidewalls. Table I shows a typical formulation for a white tire sidewall. A 6x"x6"x0.094" (15,2 x 15,2 x 0,23 cm³) cured sheet of the white sidewall compound of Table I was prepared by molding in a bladder mold for 28 minutes/300°F/100 psi (28 mm/149°C/0,7MPa) bladder pressure/30 tons platen pressure. Then 1"x1"x0.094" (2.54x2.54x0.23cm³) test pieces were clicked out from a bigger sheet for dyeing experiments.

**Table I**

| Material | Parts |
|---|---|
| Natural Rubber | 35 |
| Chlorobutyl Rubber | 60 |
| EPDM | 5 |
| Clay | 55 |
| TiO₂ | 45 |
| Processing Aids | 7.5 |
| Fatty Acid Mix well in an intensive mixer such as two roll mill, Banbury, or Brabender | 1 |
| Sulfur | 1.2 |
| Sulfur Accelerators | 2.0 |
| Zinc Oxide | 5 |
| Antidegradant Further Mix in an Intensive Mixer | 1 |
| Total: | 217.7 |

A 1"x1"x0.094" (2,54x2,54x0,23 cm³) test piece of the white tire sidewall compounds disclosed in Table I was dipped into a solution of a mono azo dye, i.e., Akrodye™ oil yellow #6 (E-6089) (2 g per 100 g solvent) at 40°C in a terpene based KNI Solvent-2000 for 5 minutes. The sample was then removed, dried, and a cross-section cut was made to determine the extent of penetration. The dye penetration under these conditions was total, i.e., about 47 mils (1.19mm).

The above mentioned dyeing experiments were repeated using Akrodye™ oil red #1 (E-5883) in a variety of solvents for overnight soaking. As soon as test pieces were taken out from the solvent, swollen lengths were determined using Vernier Calipers and from which the % volume swell were calculated and are reported in Table II. The solubility parameters and the hydrogen bonding capacity of different solvents were taken from the Polymer Handbook whenever available and are also reported in Table II. The dye penetration whenever needed was measured using Vernier Calipers.

**Table II**

| Solvent | Solubility Parameter 3 (J/m³)^{1/2}·10⁻³ | Hydrogen Bonding* | Dye Penetration (Mil) | Volume % Swell |
|---|---|---|---|---|
| Cyclohexane | 16.8 | p | Total | 141.4 |
| m-Xylene | 18 | p | Total | 137.4 |
| Toluene | 18.2 | p | Total | 129.5 |
| KNI-2000 | 17.2 | p | Total | 108.7 |
| Decane | 13.5 | p | Total | 102.2 |
| Mineral Spirit | | | Total | 97 |
| n-Hexane | 14.9 | p | Total | 96.7 |
| n-Heptane | 15.1 | p | Total | 90.4 |
| Methylene Chloride | 19.8 | p | Total | 81.6 |
| Dodecane | 16.2 | p | Total | 68.1 |
| Diethyl Ether | 15.1 | m | Total | 57.3 |
| Pyridine | 21:9 | s | 0.0625 | 14.3 |
| 1,4-Dioxane | 20.5 | m | 0.09 mil | 14.0 |
| Acetone | 20.3 | m | 0.066 | 0.75 |
| Isobutyl Alcohol | 21.5 | s | Surface | -2.0 |
| Methanol | 29.7 | s | Surface | -3.4 |
| Isopropanol | 24 | s | Surface | -3.6 |
| Perfluoro-alkane 70 | 12.0 | p | None | -4.9 |

| | | | | |
|---|---|---|---|---|
| *p = poor, m = medium, and s = strong hydrogen bonding. | | | | |

As apparent from Table II, the hydrocarbon solvents of the present invention having solubility parameters between 13 and 18 as well as low amounts of polar groups and generally poor hydrogen bonding resulted in good penetration of the dye as well as good volume swell of the non-black rubber. In contrast, polar containing compounds such as alcohols, ketones, nitrogen containing compounds, and the like, resulted in poor dye penetration and low volume swell.

Four samples of cured rubber having dimensions of 1"x1"x 0.1" (2.54x2.54x0.254cm) were prepared according to the formulations in Table III. Samples B, C, and D had 2, 4, and 6 times the curative concentration of Sample A. This resulted in higher crosslink densities in samples B, C, and D, which restricted their ability to swell with toluene solvent as shown in the volume percent swell test. The reduced swelling of samples B, C, and D resulted in a slower rate of dye penetration and shallower dye penetration as shown by the dye penetration values.

**Table III**

| Materials | A | B | C | D |
|---|---|---|---|---|
| Natural rubber | 70.00 | 70.00 | 70.00 | 70.00 |
| SBR-1502 | 30.00 | 30.00 | 30.00 | 30.00 |
| Silane treated clay | 27.5 | 27.5 | 27.5 | 27.5 |
| Titanium dioxide | 37.00 | 37.00 | 37.00 | 37.00 |
| Naphthenic/paraffinic medium process oil | 1.00 | 1.00 | 1.00 | 1.00 |
| Stearic acid | 1.5 | 1.5 | 1.5 | 1.5 |
| Diphenyl guanidine | 0.15 | 0.3 | 0.6 | 0.9 |
| Benzothiazyl disulfide | 1.5 | 3.0 | 6.0 | 9.0 |
| Zinc oxide | 20 | 20 | 20 | 20 |
| Polymeric hindered phenol | 1.5 | 3.0 | 6.0 | 9.0 |
| Insoluble sulfur | 2.75 | 5.5 | 11.0 | 16.5 |
| Dye penetration | 0.038" | 0.037" | 0.028" | 0.011" |
| Volume percent swell | 174 | 152 | 118 | 75 |

The volume percent swell test was conducted by soaking a 1"x1"x 0.1" (2.54x2.54x0.254cm) sample in toluene overnight and then measuring the increase in the largest dimension of the sample. The increase in the dimension was cubed to give volume percent swell.

The dye penetration was conducted by dipping a 1"x1"x 0.1" (2.54x2.54x0.254 cm) sample in a solution of Akrodye™ oil red #1 in KNI Solvent-2000 for 20 minutes. The dye concentration was 2 grams per 100 ml of solvent. After the sample was removed, the solvent was allowed to evaporate and the dyed sample was cut in half. The dye penetration was then measured using Vernier Calipers after drying at room temperature.

Utilizing the general white rubber formulations set forth in Table IV with the specific rubbers set forth in Table V, other non-black cured rubber (1"x1"x0.076") examples were made and dyed utilizing 2 g of Akrodye™ oil red #1 in 100 g of KNI Solvent-2000. The dye was applied by dipping the test piece for 20 minutes at room temperature. The results are set forth in Table V.

**Table IV**

| | Material | Parts |
|---|---|---|
| First Mix | Polymers (see E, F, G, & H) | 100 |
| | Clays | 27.5 |
| | TiO₂ | 37 |
| | Processing Oil | 1 |
| | Fatty Acid | 1.5 |
| Second Mix | Benzothiazyl disulfide | 1.5 |
| | Diphenylquanidine | 0.15 |
| | Antioxidant | 1.5 |
| | Sulfur (80%) | 2.75 |
| | Zinc Oxide | 20 |
| | Total: | 192.9 |

**Table V**

| **DYEABILITY OF WHITE COMPOUNDS BASED ON DIFFERENT RUBBERS** **All Compounds Exposed to Red dyeing solution for 20'@ RT** **Sample Thickness = 0.076"** | | |
|---|---|---|
| Example | E | F |
| Rubbers | Natural/EPDM | Natural/SBR |
| Natural | 50 parts by weight | 70 parts by weight |
| Cl Butyl | | |
| EPDM | 50 parts by weight | |
| SBR | | 30 parts by weight |
| Dyeable | Yes | Yes |
| Penetration Depth | >0.038" | >0.038" |

| Example | G | H |
|---|---|---|
| Rubbers | Natural | Natural/Chlorobutyl |
| Natural | 100 parts by weight | 50 parts by weight |
| Cl Butyl | | 50 parts by weight |
| EPDM | | |
| SBR | | |
| Dyeable | Yes | Yes |
| Penetration Depth | >0.038" | >0.038" |

As apparent from the Table V where the dye penetrated >0.038" from both sides of the samples to dye the entire sample (0.076"), various types of cured elastomers were readily dyeable throughout the total thickness of the rubber.

The recipe set forth in Table I was modified by adding various amounts of carbon black thereto. 6"x6"x0.094" cured test panels were dyed by dipping in a solution of Akrodye™ red #1 (E-5883) in KNI Solvent-2000 (2 g dye in 100 ml solvent). Colors were compared before and after dyeing and also their L* values were measured using a Hunter Ultascan equipment and the results are reported in Table VI.

**Table VI**

| **Effect of carbon black content in tire white sidewall compound on dyeability as measured by ASTM E 308, Commission Internationale de l'Eclairage CIE publication No. 15.2 (CIE) indices (L*)** | | | |
|---|---|---|---|
| % Carbon Black | Dyeing | L* | Visual Color |
| 0 | Before | 87.53 | White |
| 0 | After | 69.49 | Pink |
| 0 | % Diff | 20.61 | High |
| 0.5 | Before | 56.49 | Med Gray |
| 0.5 | After | 52.03 | Gray-Purple |
| 0.5 | % Diff | 7.90 | Medium |
| 2.0 | Before | 40.07 | Slate Gray |
| 2.0 | After | 39.69 | Dark Slate |
| 2.0 | % Diff | 0.95 | Low |

As apparent from Table VI, the amounts of carbon black within the rubber are kept very low so that L* values before are at least 40. Otherwise, the rubber is simply not defined as a non-black rubber.

Table VII relates to dyes that were in accordance with the concepts of the present invention and dyes that did not work. Approximately 2 grams of dye were dissolved/dispersed in 200 ml of KNI Solvent-2000. To this was added the 1"x1"x 0.14" of cured control white sidewall test pieces (prepared from 35 natural/65 Cl Butyl + EPDM), i.e., Table I. It was taken out after overnight soaking and then cut into two pieces to examine dye penetration. The dye is said to have worked if it penetrated totally, otherwise it did not work. Just surface coating and penetration less than total on overnight soaking is considered as non-dyeing. Dyes that worked and that did not work are tabulated below.

**Table VII**

| Dyes That Worked | Dyes/Pigments That Did Not Work |
|---|---|
| Akrodye™ Oil Yellow #6, E-6089 | Akrodye™ Oil Black #4 (E-8540) |
| Akrodye™ Oil Red #1, E-5883 | Ceres™ Yellow |
| Akrodye™ Oil Green #1 | Akrochem 626 Blue Powder |
| Akrodye™ E-8855 Brown Powder | Akrosperse E-98 Blue Paste |
| Akrodye™ Oil Orange #3 | Intrasperse Yellow GBA Extra |
| Akrodye™ Oil Violet IRS | Intralan Yellow NW 250% |
| Morplas™ Red 46 | Aluminum Paste |
| Automate™ Yellow 126 | 2B-Extra Concentrate Blue Dye |
| Automate™ Red B | Precipitated Azo Pigment |
| Ceres™ Red | Red Iron Oxide |
| Morplas™ Yellow 33 | |
| Pylakrome™ Red LX-1903 | |
| Pylakrome™ Yellow LX-1913A | |
| Pylam™ Blue LX-7270 | |

While certain representative embodiments and details have been shown for the purpose of illustrating the invention, it will be apparent to those skilled in this art that various changes and modifications may be made therein without departing from the spirit or scope of the invention.

## Claims

1. A pneumatic tire, comprising;
a toroidal shaped carbon black filled vulcanized rubber composition having integral therewith, a crosslinked non-black rubber composition comprising at least one hydrocarbon rubber having less than 10 weight percent of polar groups therein and other than small amounts of halogens, a white pigment, **characterized by** having a hydrocarbon soluble dye absorbed into at least a portion of said crosslinked non-black rubber composition, said non-black rubber composition having an exposed surface with a CIE 1976 L* value of at least 40.

2. A pneumatic tire according to claim 1, **characterized in that** the said crosslinked non-black hydrocarbon rubber composition comprises from 20 to 80 parts by weight of a copolymer per 100 parts by weight of said total hydrocarbon rubber, said copolymer containing at least 50 weight percent of repeat units derived from one or more C₄ to C₇ isomonoolefin monomers, and wherein said toroidal shaped vulcanized composition has a tread region and two sidewall regions.

3. A pneumatic tire according to claim 2, **characterized in that** the said white pigment comprises titanium dioxide, wherein said portion having absorbed dye of said non-black rubber composition is one or more selective exterior layers, and wherein said crosslinked non-black rubber composition has swelling capacity of at least 75 volume percent in a hydrocarbon solvent.

4. A pneumatic tire according to claim 3, **characterized in that** the said non-black rubber composition comprises:
from 25 to 65 parts by weight of a copolymer being at least 50 weight percent repeat units from one or more C₄ to C₇ isomonoolefin monomers;
up to 30 parts by weight of EPDM rubber, and
from 15 to 75 parts by weight of natural rubber or a synthetic polymer or combinations thereof, said synthetic polymer having at least 50 weight percent of repeat units derived from a C₄ to C₁₂ conjugated diene monomer,
said parts by weight based upon 100 parts by weight total rubbers of said non-black rubber composition.

5. A pneumatic tire according to claim 1, **characterized in that** the said hydrocarbon soluble dye has a solubility in a hydrocarbon solvent of at least 0.001 gram per one gram of said hydrocarbon solvent, said hydrocarbon solvent having a solubility parameter of from 12 to 20, and wherein said crosslinked non-black hydrocarbon rubber has less than 3 percent by weight of polar groups therein.

6. A pneumatic tire according to claim 5, **characterized in that** the said dye is an azo, diazo dye, an anthraquinone dye, a quinoline dye, an aromatic hydrocarbon dye, an indo dye, or a ketone imine/methine dye, or derivatives thereof, or combinations thereof.

7. A pneumatic tire according to claim 4, **characterized in that** the said hydrocarbon soluble dye has a solubility in a hydrocarbon solvent of at least 0.001 gram per one gram of said hydrocarbon solvent having a solubility parameter of from 12 to 20, and wherein said crosslinked non-black hydrocarbon rubber has less than 2 percent by weight of polar groups therein.

8. A pneumatic tire according to claim 7, **characterized in that** the said dye is an azo, diazo dye, an anthraquinone dye, a quinoline dye, an aromatic hydrocarbon dye, an indo dye, or a ketone imine/methine dye, or derivatives thereof, or combinations thereof.

9. A process for dyeing a pneumatic tire, **characterized by** comprising the steps of;
applying a dye solution to at least one selective external surface of a crosslinked non-black rubber composition integral with said pneumatic tire, said dye solution being comprised of a dye and a hydrocarbon solvent having a solubility parameter of from 12 to 20 [J/m³]^{1/2}·10⁻³ and a flash point of at least 38°C, said solvent containing less than 10 percent by weight of polar atoms other than halogens based upon the total weight of said solvent, said dye being soluble in said hydrocarbon solvent,
forming a dye penetration layer in said non-black rubber composition at said selective surface, and
evaporating said hydrocarbon solvent.

10. A process according to claim 9, **characterized in that** the said crosslinked non-black surface of said pneumatic tire is one or more sidewall surfaces, wherein said dye penetration layer is up to 100 mils (2,5 mm) deep in said one or more non-black rubber composition sidewall surfaces, and wherein said hydrocarbon solvent contains less than 5 percent by weight of polar atoms.

11. A process according to claim 10, **characterized in that** the said non-black sidewall surface has a CIE 1976 L* value before dyeing of at least 50 according to method ASTM E 308, and wherein said hydrocarbon solvent has a solubility parameter of from 13 to 18.

12. A process according to claim 11, **characterized in that** the said penetration layer is from 10 to 80 mils (0,25 to 2 mm) deep, wherein said hydrocarbon solvent contains less than 2 percent by weight of polar atoms, wherein said non-black rubber composition has a swelling capacity of at least 75 percent in a hydrocarbon solvent, and wherein said CIE 1976 L* value is at least 80.

13. A process according to claim 12, **characterized in that** the said penetration layer has a dye gradient therein.

14. A rubber article, comprising;
a crosslinked substrate and an adhered crosslinked non-black rubber composition layer thereon having a swelling capacity in a hydrocarbon solvent of at least 75 percent, **characterized by** having a penetration layer located in the exterior portion of said non-black rubber composition layer up to the thickness thereof, and said penetration layer containing a dye therein.

15. A rubber article according to claim 14, **characterized in that** the said non-black rubber has a non-dyed CIE 1976 L* value of at least 40 according to method ASTM E 308, wherein said dye is a hydrocarbon soluble dye, and wherein said penetration layer extends up to 80 mils (2 mm) deep.

16. A rubber article according to claim 15, **characterized in that** the said substrate is a pneumatic tire and wherein said swellable non-black rubber layer is a white tire sidewall, and wherein said dye is an azo dye, a diazo dye, a quinoline dye, an anthraquinone dye, an aromatic hydrocarbon dye, an indo dye, or a ketone imine/methine dye, or derivatives thereof, or combinations thereof.

## Patentansprüche

1. Luftreifen, umfassend eine ringförmige, rußgefüllte, vulkanisierte Kautschukzusammensetzung mit einer damit integrierten, vernetzten, nicht-schwarzen Kautschukzusammensetzung, umfassend mindestens einen Kohlenwasserstoff-Kautschuk, der weniger als 10 Gew.-% polare Gruppen aufweist, geringe Mengen an Halogenen ausgenommen, und ein Weißpigment, **dadurch gekennzeichnet, daß** in mindestens einem Teil der vernetzten, nicht-schwarzen Kautschukzusammensetzung ein in Kohlenwasserstoff löslicher Farbstoff absorbiert ist, wobei die nicht-schwarze Kautschukzusammensetzung eine freiliegende Oberfläche mit einem CIE 1976 L*-Wert von mindestens 40 aufweist.

2. Luftreifen nach Anspruch 1, **dadurch gekennzeichnet, daß** die vernetzte, nicht-schwarze Kohlenwasserstoffkautschuk-Zusammensetzung 20 bis 80 Gew.-Teile eines Copolymers pro 100 Gew.-Teile des ganzen Kohlenwasserstoffkautschuks umfaßt, wobei das Copolymer mindestens 50 Gew.-% an Struktureinheiten enthält, die von einem oder mehreren C₄-C₇-lsomonoolefin-Monomeren abgeleitet sind, und worin die ringförmige, vulkanisierte Zusammensetzung einen Laufflächenbereich und zwei Seitenwandbereiche aufweist.

3. Luftreifen nach Anspruch 2, **dadurch gekennzeichnet, daß** das Weißpigment Titandioxid umfaßt, wobei der Teil der nicht-schwarzen Kautschukzusammensetzung mit absorbiertem Farbstoff eine oder mehrere ausgewählte Außenschichten darstellt und die vernetzte, nicht-schwarze Kautschukzusammensetzung ein Quellvermögen von mindestens 75 Volumen-% in einem Kohlenwasserstoff-Lösungsmittel aufweist.

4. Luftreifen nach Anspruch 3, **dadurch gekennzeichnet, daß** die nicht-schwarze Kautschukzusammensetzung umfaßt:
25 bis 65 Gew.-Teile eines Copolymers mit mindestens 50 Gew.-% Struktureinheiten von einem oder mehreren C₄-C₇-Isomonoolefin-Monomeren,
bis zu 30 Gew.-Teile EPDM-Kautschuk und
15 bis 75 Gew.-Teile Naturkautschuk oder ein synthetisches Polymer oder Kombinationen davon, wobei das synthetische Polymer mindestens 50 Gew.-% an Struktureinheiten aufweist, die von einem konjugierten C₄-C₁₂-Dienmonomer abgeleitet sind,
wobei die Gew.-Teile auf 100 Gew.-Teile Gesamtkautschuke der nicht-schwarzen Kautschukzusammensetzung bezogen sind.

5. Luftreifen nach Anspruch 1, **dadurch gekennzeichnet, daß** der in Kohlenwasserstofflösliche Farbstoff eine Löslichkeit in einem Kohlenwasserstoff-Lösungsmittel von mindestens 0,001 g pro 1 g des Kohlenwasserstoff-Lösungsmittels aufweist, wobei das Kohlenwasserstoff-Lösungsmittel einen Löslichkeitsparameter von 12 bis 20 aufweist und der vernetzte, nicht-schwarze Kohlenwasserstoff-Kautschuk weniger als 3 Gew.-% an polaren Gruppen aufweist.

6. Luftreifen nach Anspruch 5, **dadurch gekennzeichnet, daß** der Farbstoff ein Azo-Farbstoff, ein Diazo-Farbstoff, ein Anthrachinon-Farbstoff, ein Chinolin-Farbstoff, ein aromatischer Kohlenwasserstoff-Farbstoff, ein Indofarbstoff oder ein Ketonimin/Methin-Farbstoff oder Derivate davon oder Kombinationen davon ist.

7. Luftreifen nach Anspruch 4, **dadurch gekennzeichnet, daß** der in Kohlenwasserstoff lösliche Farbstoff eine Löslichkeit in einem Kohlenwasserstoff-Lösungsmittel von mindestens 0,001 g pro 1 g des Kohlenwasserstoff-Lösungsmittels mit einem Löslichkeitsparameter von 12 bis 20 aufweist und der vernetzte, nicht-schwarze Kohlenwasserstoff-Kautschuk weniger als 2 Gew.-% an polaren Gruppen aufweist.

8. Luftreifen nach Anspruch 7, **dadurch gekennzeichnet, daß** der Farbstoff ein Azo-Farbstoff, ein Diazo-Farbstoff, ein Anthrachinon-Farbstoff, ein Chinolin-Farbstoff, ein aromatischer Kohlenwasserstoff-Farbstoff, ein Indo-Farbstoff oder ein Ketonimin/Methin-Farbstoff oder Derivate davon oder Kombinationen davon ist.

9. Verfahren zum Färben eines Luftreifens, **dadurch gekennzeichnet, daß** es folgende Schritte umfaßt:
Aufbringen einer Farbstofflösung auf mindestens eine ausgewählte Außenoberfläche einer vernetzten, nicht-schwarzen Kautschukzusammensetzung, die mit dem Luftreifen integriert ist, wobei die Farbstofflösung einen Farbstoff und ein Kohlenwasserstoff-Lösungsmittel mit einem Löslichkeitsparameter von 12 bis 20 [J/m³]^{1/2}·10⁻³ und einem Flammpunkt von mindestens 38°C umfaßt und das Lösungsmittel weniger als 10 Gew.-% an von Halogenen verschiedenen polaren Atomen, bezogen auf das Gesamtgewicht des Lösungsmittels, enthält und der Farbstoff in dem Kohlenwasserstoff-Lösungsmittel löslich ist,
Bilden einer Farbstoff-Penetrationsschicht in der nicht-schwarzen Kautschukzusammensetzung auf der ausgewählten Oberfläche und
Verdampfen des Kohlenwasserstoff-Lösungsmittels.

10. Verfahren nach Anspruch 9, **dadurch gekennzeichnet, daß** die vernetzte, nicht-schwarze Oberfläche des Luftreifens eine oder mehrere Seitenwand-Oberflächen darstellt, worin die Farbstoff-Penetrationsschicht eine Tiefe von bis zu 100 mil (2,5 mm) in der einen oder den mehreren nicht-schwarzen Kautschukzusammensetzungs-Seitenwandoberflächen hat und das Kohlenwasserstoff-Lösungsmittel weniger als 5 Gew.-% polare Atome enthält.

11. Verfahren nach Anspruch 10, **dadurch gekennzeichnet, daß** die nicht-schwarze Seitenwandoberfläche vor dem Färben einen CIE 1976 L*-Wert von mindestens 50 nach dem Verfahren ASTM E 308 aufweist und das Kohlenwasserstoff-Lösungsmittel einen Löslichkeitsparameter von 13 bis 18 aufweist.

12. Verfahren nach Anspruch 11, **dadurch gekennzeichnet, daß** die Penetrationsschicht eine Tiefe von 10 bis 80 mil (0,25 bis 2 mm) aufweist, wobei das Kohlenwasserstoff-Lösungsmittel weniger als 2 Gew.-% polare Atome enthält und die nicht-schwarze Kautschukzusammensetzung ein Quellvermögen von mindestens 75% in einem Kohlenwasserstoff-Lösungsmittel aufweist und der CIE 1976 L*-Wert mindestens 80 beträgt.

13. Verfahren nach Anspruch 12, **dadurch gekennzeichnet, daß** die Penetrationsschicht einen Farbstoffgradienten aufweist.

14. Gummigegenstand, umfassend ein vernetztes Substrat und eine darauf anhaftende, vernetzte, nicht-schwarze Kautschukzusammensetzungs-Schicht mit einem Quellvermögen in einem Kohlenwasserstoff-Lösungsmittel von mindestens 75%, **dadurch gekennzeichnet, daß** er eine Penetrationsschicht aufweist, die sich im äußeren Teil der nicht-schwarzen Kautschukzusammensetzungs-Schicht von bis zu ihrer Dicke befindet und die Penetrationsschicht einen Farbstoff enthält.

15. Gummigegenstand nach Anspruch 14, **dadurch gekennzeichnet, daß** der nicht-schwarze Gummi einen ungefärbten CIE 1976 L*-Wert von mindestens 40 nach dem Verfahren ASTM E 308 aufweist, wobei der Farbstoff ein in Kohlenwasserstoff löslicher Farbstoff ist und die Penetrationsschicht sich bis in eine Tiefe von bis zu 80 mil (2 mm) erstreckt.

16. Gummigegenstand nach Anspruch 15, **dadurch gekennzeichnet, daß** das Substrat ein Luftreifen ist und die quellbare, nicht-schwarze Gummischicht eine weiße Reifenseitenwand ist und der Farbstoff ein Azo-Farbstoff, ein Diazo-Farbstoff, ein Chinolin-Farbstoff, ein Anthrachinon-Farbstoff, ein aromatischer Kohlenwasserstoff-Farbstoff, ein indofarbstoff oder ein Ketonimin/Methin-Farbstoff oder Derivate davon oder Kombinationen davon ist.

## Revendications

1. Bandage pneumatique comprenant :
une composition de caoutchouc vulcanisé de forme toroïdale et contenant du noir de carbone à titre de matière de charge, faisant corps avec une composition de caoutchouc non noir réticulé comprenant au moins un caoutchouc d'hydrocarbure contenant, à concurrence de moins de 10 pour cent en poids, des groupes polaires autres que de petites quantités d'atomes d'halogène et un pigment blanc, **caractérisé par le fait qu'**un colorant soluble dans les hydrocarbures est absorbé dans au moins une portion de ladite composition de caoutchouc non noir réticulé, ladite composition de caoutchouc non noir possédant une surface exposée avec une valeur CIE 1976 L* d'au moins 40.

2. Bandage pneumatique selon la revendication 1, **caractérisé en ce que** ladite composition de caoutchouc d'hydrocarbure non noir réticulé comprend, à concurrence de 20 à 80 parties en poids, un copolymère par 100 parties en poids de la quantité totale dudit caoutchouc d'hydrocarbure, ledit copolymère contenant, à concurrence d'au moins 50 pour cent en poids, des unités de structure qui dérivent d'un ou de plusieurs monomères d'isomonooléfines en C₄-C₇, et dans lequel ladite composition vulcanisée de forme toroïdale possède une région de bande de roulement et deux régions de flancs.

3. Bandage pneumatique selon la revendication 2, **caractérisé en ce que** ledit pigment blanc comprend du dioxyde de titane, ladite portion dans laquelle est absorbé un colorant de ladite composition de caoutchouc non noir représente une ou plusieurs couches externes sélectives, et dans lequel ladite composition de caoutchouc non noir réticulé possède une capacité de gonflement d'au moins 75 pour cent en volume dans un solvant d'hydrocarbure.

4. Bandage pneumatique selon la revendication 3, **caractérisé en ce que** ladite composition de caoutchouc non noir comprend :
à raison de 25 à 65 parties en poids, un copolymère constitué à concurrence d'au moins 50 pour cent en poids par des unités de structure qui dérivent d'un ou de plusieurs monomères d'isomonooléfines en C₄-C₇,
jusqu'à concurrence de 30 parties en poids, du caoutchouc EPDM, et
à raison de 15 à 75 parties en poids, du caoutchouc naturel ou un polymère synthétique ou encore leurs combinaisons, ledit polymère synthétique possédant, à concurrence d'au moins 50 pour cent en poids, des unités de structure qui dérivent d'un monomère de diène conjugué en C₄-C₁₂,
lesdites parties en poids étant basées sur 100 parties en poids de la quantité totale de caoutchouc de ladite composition de caoutchouc non noir.

5. Bandage pneumatique selon la revendication 1, **caractérisé en ce que** ledit colorant soluble dans les hydrocarbures possède une solubilité dans un solvant d'hydrocarbure s'élevant à au moins 0,001 g par gramme dudit solvant d'hydrocarbure, ledit solvant d'hydrocarbure possédant un paramètre de solubilité de 12 à 20, et dans lequel ledit caoutchouc d'hydrocarbure non noir réticulé contient des groupes polaires à concurrence de moins de 3 pour cent en poids.

6. Bandage pneumatique selon la revendication 5, **caractérisé en ce que** ledit colorant est un colorant azoïque, un colorant diazoïque, un colorant hydrocarbure aromatique, un colorant indoïque, ou un colorant de cétone-imine/méthine, ou encore leurs dérivés ou leurs combinaisons.

7. Bandage pneumatique selon la revendication 4, **caractérisé en ce que** ledit colorant soluble dans les hydrocarbures possède une solubilité dans un solvant d'hydrocarbure d'au moins 0,001 g par gramme dudit solvant d'hydrocarbure qui possède un paramètre de solubilité de 12 à 20, et dans lequel ledit caoutchouc d'hydrocarbure non noir réticulé contient des groupes polaires à concurrence de moins de 2 pour cent en poids.

8. Bandage pneumatique selon la revendication 7, **caractérisé en ce que** ledit colorant est un colorant azoïque, un colorant diazoïque, un colorant d'anthraquinone, un colorant de quinoléine, un colorant d'hydrocarbure aromatique, un colorant indoïque, ou un colorant de cétone-imine/méthine, ou encore leurs dérivés ou leurs combinaisons.

9. Procédé pour colorer un bandage pneumatique, **caractérisé par le fait qu'**il comprend les étapes consistant à :
appliquer une solution de colorant sur au moins une surface externe sélective d'une composition de caoutchouc non noir réticulé faisant corps avec ledit bandage pneumatique, ladite solution de colorant comprenant un colorant et un solvant d'hydrocarbure possédant un paramètre de solubilité de 12 à 20 [J/m³]^{1/2}·10⁻³ et un point d'inflammation d'au moins 38 °C, que ledit solvant contenant, à concurrence de moins de 10 pour cent en poids, des atomes polaires autres que des atomes d'halogène, basés sur le poids total du solvant, ledit colorant étant soluble dans ledit solvant d'hydrocarbure,
former une couche de pénétration de colorant dans ladite composition de caoutchouc non noir à ladite surface sélective, et
évaporer ledit solvant d'hydrocarbure.

10. Procédé selon la revendication 9, **caractérisé en ce que** ladite surface non noire réticulée dudit bandage pneumatique représente une ou plusieurs surfaces des flancs, dans lequel ladite couche de pénétration de colorant s'étend à une profondeur allant jusqu'à 100.000e de pouce (2,5 mm) dans ladite ou lesdites surfaces de flancs de la composition de caoutchouc non noir, et dans lequel ledit solvant d'hydrocarbure contient des atomes polaires à concurrence de moins de 5 pour cent en poids.

11. Procédé selon la revendication 10, **caractérisé en ce que** ladite surface de flanc non noire possède une valeur CIE 1976 L* avant la coloration d'au moins 50 conformément au procédé ASTM E 308, et dans lequel ledit solvant d'hydrocarbures possède un paramètre de solubilité de 13 à 18.

12. Procédé selon la revendication 11, **caractérisé en ce que** ladite couche de pénétration s'étend à une profondeur de 10 à 80.000e de pouce (de 0,25 à 2 mm), dans lequel ledit solvant d'hydrocarbure contient des atomes polaires à concurrence de moins de 2 pour cent en poids, dans lequel ladite composition de caoutchouc non noir possède une capacité de gonflement s'élevant à au moins 75 pour cent dans un solvant d'hydrocarbure et dans lequel ladite valeur CIE 1976 L* s'élève à au moins 80.

13. Procédé selon la revendication 12, **caractérisé en ce que** ladite couche de pénétration contient un gradient de colorant.

14. Article en caoutchouc, comprenant :
un substrat réticulé auquel adhère une couche de composition de caoutchouc non noir réticulé possédant une capacité de gonflement dans un solvant d'hydrocarbure s'élevant à au moins 75 pour cent, **caractérisé par le fait qu'**il possède une couche de pénétration située dans la portion externe de ladite couche de composition de caoutchouc non noir s'étendant sur son épaisseur, ladite couche de pénétration contenant un colorant.

15. Article en caoutchouc selon la revendication 14, **caractérisé en ce que** ledit caoutchouc non noir possède une valeur à l'état non coloré CIE 1976 L* s'élevant à au moins 40 conformément au procédé ASTM E 308, dans lequel ledit colorant est un colorant soluble dans les hydrocarbures et dans lequel ladite couche de pénétration s'étend jusqu'à une profondeur de 80.000e de pouce (2 mm).

16. Article en caoutchouc selon la revendication 15, **caractérisé en ce que** ledit substrat est un bandage pneumatique dans lequel ladite couche de caoutchouc non noir apte à gonfler est un flanc blanc de bandage pneumatique, et dans lequel ledit colorant est un colorant azoïque, un colorant diazoïque, un colorant d'anthraquinone, un colorant de quinoléine, un colorant d'hydrocarbure aromatique, un colorant indoïque, ou un colorant de cétone-imine/méthine, ou encore leurs dérivés ou leurs combinaisons.
